(19) Europäisches Patentamt
European Patent Office
Office européen des brevets

(11) Publication number: **0 278 331 B1**

# (12) EUROPEAN PATENT SPECIFICATION

(45) Date of publication of patent specification: **23.12.92**

(51) Int. Cl.[5]: **C08L 83/14**

(21) Application number: **88101201.7**

(22) Date of filing: **27.01.88**

## (54) Ultraviolet-curable gel composition.

(30) Priority: **28.01.87 JP 18028/87**

(43) Date of publication of application:
**17.08.88 Bulletin 88/33**

(45) Publication of the grant of the patent:
**23.12.92 Bulletin 92/52**

(84) Designated Contracting States:
**DE FR GB**

(56) References cited:
**EP-A- 0 154 898**
**EP-A- 0 182 941**
**EP-A- 0 223 600**
**EP-A- 0 239 437**
**WO-A-86/00322**
**US-A- 4 339 563**

(73) Proprietor: **Shin-Etsu Chemical Co., Ltd.**
**6-1, Otemachi 2-chome**
**Chiyoda-ku Tokyo 100(JP)**

(72) Inventor: **Hida, Yoshinori**
**No. 17-10, Isobe 3-chome**
**Annaka-shi Gunma-ken(JP)**
Inventor: **Katayama, Seizi**
**Shinpu-ryo, No. 1 610, Nishikamiisobe**
**Annaka-shi Gunma-ken(JP)**

(74) Representative: **TER MEER - MÜLLER - STEINMEISTER & PARTNER**
**Mauerkircherstrasse 45**
**W-8000 München 80(DE)**

**EP 0 278 331 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### 1. Field of the Invention

The present invention relates to a gel composition which comprises an organopolysiloxane as principal component, which is easily curable with ultraviolet rays owing to the introduction thereinto of an unsaturated double bond capable of addition polymerization.

#### 2. Description of the Prior Art

Heretofore, there has been known a thermosetting gel composition of organo polysiloxane which is cured through the addition reaction of an unsaturated double bond or triple bond and a silicon-hydrogen bond by the aid or a metal catalyst (such as platinum) or a peroxide.

A disadvantage of the conventional gel composition is that curing needs a high temperature and a long time.

EP-A-0 182 941 discloses an ultraviolet-curable polyorganosiloxane composition adapted for use in electronic potting applications which comprises a reactive silicone obtained by reacting a silanol terminated silicone with an acrylic functional trialkoxy- or triaryloxy-silane.

WO-A-86 00322 describes acrylic functional liquid polyorganosiloxane polymers which can be cured by UV-radiation or chemically to elastomers. The polymers comprise an elongated diorganosiloxane segment free of acrylic functionality and a shorter organosiloxane segment containing a plurality of siloxane repeating units and a triorganosilyl group.

### SUMMARY OF THE INVENTION

It is an object of the present invention to provide an ultraviolet-curable gel composition which easily cures in a short time by the irradiation of ultraviolet rays.

The present inventors carried out a series of researches on an ultraviolet-curable gel composition of organopolysiloxane which easily cures upon irradiation with ultraviolet rays. It was found that the specific organopolysiloxane readily cures when irradiated with ultraviolet rays for a short time in the presence of a photopolymerization initiator.

The subject matter of the present invention therefore is the ultraviolet-curable gel composition according to claim 1. Subclaim 2 comprises a preferred embodiment thereof.

The above and other objects, features and advantages of the present invention will be more apparent from the following description.

### DETAILED DESCRIPTION OF THE INVENTION

The ultraviolet-curable gel composition of the present invention comprises an organopolysiloxane as a principal component which is represented by the general structural formula:

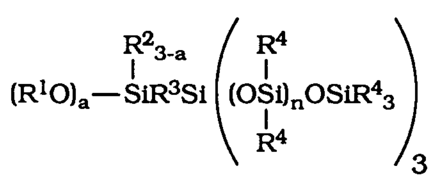

wherein $R^1$ is a monovalent organic group having 4 to 25 carbon atoms and containing 1 to 2 vinyl functional groups, $R^1$ being selected from the following formulae:

$CH_2 = CHCOOR-$, $CH_2 = C(CH_3)COOR-$, $CH_2 = CHCOR-$,
$(CH_2 = CHCOOR)_2R'-$, $\{CH_2 = C(CH_3)COOR\}_2R'-$ and
$(CH_2CHCOR)_2R'-$, $CH_2 = CH(CH_3)COOCH_2CHCH_2OOCCH = CH_2$

wherein R represents a substituted or unsubstituted divalent hydrocarbon group having 1 to 10 carbon

atoms or a group of formula $CH_2CH(CH_2OC_6H_5)$ and R' represents CH- or $CCH_3$-; $R^2$ is a monovalent organic group having 1 to 18 carbon atoms and having no vinyl group capable of addition polymerization; $R^3$ is a divalent hydrocarbon group having 2 to 4 carbon atoms; $R^4$ is a substituted or unsubstituted hydrocarbon group having 1 to 9 carbon atoms of the same or different kind; a is an integer of 1 to 3; and n is an integer of 5 to 500; and less than 10 parts by weight of a photopolymerization initiator for 100 parts by weight of said organopolysiloxane.

Examples of R representing a substituted or unsubstituted divalent hydrocarbon group having 1 to 10 carbon atoms are the methylene group, ethylene group, propylene group and butylene group. More particularly, $R^1$ includes $CH_2=CHCOOCH_2CH_2$-, $CH_2=C(CH_3)COOCH_2CH_2$-, $CH_2=CHCOOCH_2CH(CH_2OC_6H_5)$-, and $\{CH_2=C(CH_3)COOCH_2\}_2CH$-. Examples of $R^2$ which is a monovalent organic group having 1 to 18 carbon atoms and having no vinyl group capable of addition polymerization include methyl, ethyl, propyl, butyl, pentyl, phenyl, and tolyl groups. They also include alkoxyl groups such as methoxy, ethoxy, propoxy, isopropoxy, butoxy, sec-butyloxy, tert-butyloxy, and neopentyloxy groups; the phenoxy group; and organosilicon groups such as trimethylsiloxy, phenyldimethylsiloxy, diethylmethylsiloxy, and tert-butyldimethylsiloxy groups. Preferred examples of $R^2$ are those which contain an isopropyl group, tert-butyl group, or neopentyl group which produces a desirable effect for hydrolysis. Examples of $R^3$ which is a divalent hydrocarbon group include ethylene, propylene, and butylene groups, the first being most common. Examples of $R^4$ which is a substituted or unsubstituted hydrocarbon group include a variety of groups. Preferable among them are those in which methyl groups account for more than 50% and phenyl groups etc. account for less than 35%.

The organopolysiloxane has an adequate molecular weight, so that n is an integer from 5 to 500, preferably from 15 to 300. With an excessively small molecular weight, the organopolysiloxane provides a hard cured product; and with an excessively large molecular weight, the organopolysiloxane has such a high viscosity that it is hard to handle. The viscosity at 25 °C of the organopolysiloxane varies from 100 to 50000 mPas depending on the molecular weight.

The organopolysiloxane represented by the general structural formula above can be obtained by any known process such as the dehydrochlorination reaction between a corresponding chlorosilane and a compound containing a vinyl group capable of addition polymerization and containing an active hydrogen.

The organopolysiloxane contains the $R^1$ group as a photosensitive group, and therefore, it can be easily cured by ultraviolet rays. For effective curing in actual use, the organopolysiloxane comprises a photopolymerization initiator such as benzophenone, benzoin ether, ketal, thioxanthone, acetophenone type, etc or derivatives thereof in an amount of less than 10 parts by weight, preferably 0,5 to 3 parts by weight for 100 parts by weight of the organopolysiloxane.

The gel composition of the present invention may be incorporated with a pigment, antioxidant, antistatic agent, flame retardant, silica, silicone oil and varnish, and organic and inorganic fillers, in such an amount that they do not impair the transparency to ultraviolet rays.

The gel composition of the present invention readily cures upon irradiation of ultraviolet rays for a short time and provides a thick cured product of organopolysiloxane. The irradiation of ultraviolet rays may be carried out in a usual way, for example, by using an ultraviolet lamp such as a high-pressure mercury lamp, metal halide lamp and the like at 80~160W/cm for 0.1 second to several ten seconds.

The gel composition provides a cured product with a minimum of blurring. Moreover, the gel composition of the present invention cures rapidly with ultraviolet rays and the cured product has good heat resistance and water resistance and changes very little in hardness over a broad temperature range. Therefore, it finds use under various conditions such as potting of electric and electronic parts and protection of optical fibers.

To further illustrate the invention, and not by way of limitation, the following synthesis examples and operative examples are given.

Synthesis Example

In a 1000-ml reactor equipped with a stirrer, a reflux condenser, and a dry air inlet were placed 663 g of organopolysiloxane represented by the general structural formula below and 250 g of toluene, and to the reaction system were further added 7.0 g of triethylamine and 0.3 g of dibutylhydroxytoluene.

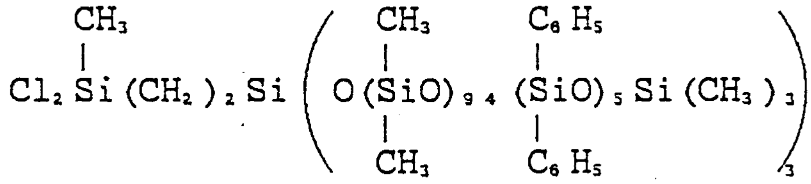

To the reaction system was added with thorough stirring a compound represented by the structural formula below.

$C_6H_5OCH_2CH(OH)CH_2OCOCH=CH_2$

The reaction was carried out at 70°C for 3 hours. Then, 2.8 g of neopentyl alcohol was added and the reaction system was stirred at 80°C for 5 hours. After the completion of reaction, the reaction product was filtered and the solvent was distilled away at 100°C under reduced pressure. After repeated filtration, there was obtained a clear, oily organopolysiloxane represented by the formula below.

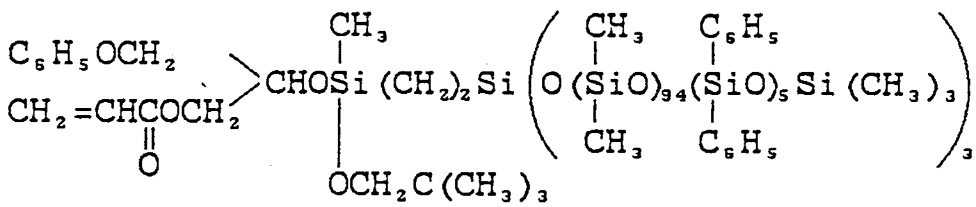

···· (A)

Organic polysiloxanes represented by the formulas B to D below were prepared in the same manner as above.

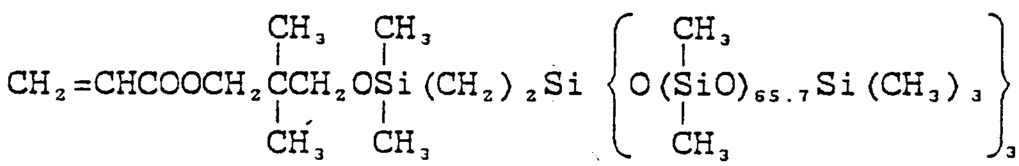

···· (B)

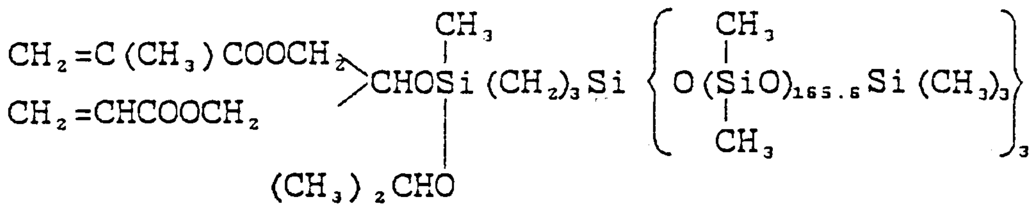

···· (C)

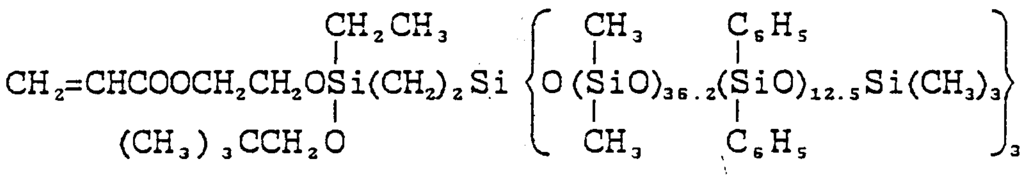

···· (D)

Example

One hundred parts by weight of each of the oily organopolysiloxanes A to D obtained in the above-mentioned synthesis example were incorporated with 1 part by weight of the photopolymerzation initiator represented by the following formula.

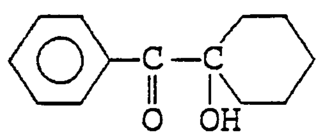

The mixture was placed in a glass Petri dish up to a level of 10 mm and irradiated for 10 seconds with ultraviolet rays from a high-pressure mercury lamp placed 10 cm away. All the polysiloxanes A to D readily cured.

The cured products of the organopolysiloxanes A to D were examined for penetration using a 1/4 micropenetrometer according to ASTM D-1403. The values of penetration were 77, 71, 86 and 65, respectively.

## Claims

1. An ultraviolet-curable gel composition which comprises an organopolysiloxane as a principal component which is represented by the general structural formula:

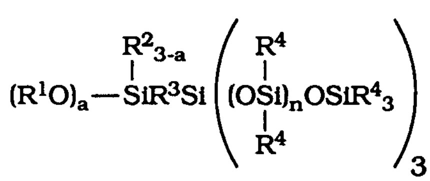

wherein $R^1$ is a monovalent organic group having 4 to 25 carbon atoms and containing 1 to 2 vinyl functional groups, $R^1$ being selected from the following formulae:

$CH_2 = CHCOOR-$, $CH_2 = C(CH_3)COOR-$, $CH_2 = CHCOR-$,
$(CH_2 = CHCOOR)_2R'-$, $\{CH_2 = C(CH_3)COOR\}_2R'-$ and
$(CH_2CHCOR)_2R'-$, $CH_2 = CH(CH_3)COOCH_2CHCH_2OOCCH = CH_2$

wherein R represents a substituted or unsubstituted divalent hydrocarbon group having 1 to 10 carbon atoms or a group of formula $CH_2CH(CH_2OC_6H_5)$ and R' represents CH- or $CCH_3$-; $R^2$ is a monovalent organic group having 1 to 18 carbon atoms and having no vinyl group capable of addition polymerization; $R^3$ is a divalent hydrocarbon group having 2 to 4 carbon atoms; $R^4$ is a substituted or unsubstituted hydrocarbon group having 1 to 9 carbon atoms of the same or different kind; a is an integer of 1 to 3; and n is an integer of 5 to 500; and less than 10 parts by weight of a photopolymerization initiator for 100 parts by weight of said organopolysiloxane.

2. The composition as defined in claim 1, wherein the photopolymerization initiator is selected from the gorup consisting of benzophenone, benzoin ether, ketal, thioxanthone, acetophenone and derivatives thereof.

**Patentansprüche**

1. Ultraviolett-härtbare Gelzusammensetzung, umfassend als eine Hauptkomponente ein Organopolysiloxan der allgemeinen Strukturformel:

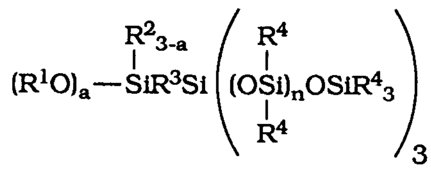

worin $R^1$ eine einwertige organische Gruppe mit 4 bis 25 Kohlenstoffatomen ist und 1 bis 2 vinylfunktionelle Gruppen enthalt, wobei $R^1$ aus den folgenden Formeln:

$CH_2 = CHCOOR$-, $CH_2 = C(CH_3)COOR$-, $CH_2 = CHCOR$-,
$(CH_2 = CHCOOR)_2R'$-, $CH_2 = CH(CH_3)COOCH_2CHCH_2OOCCH = CH_2$,
$\{CH_2 = C(CH_3)COOR\}_2R'$- und $(CH_2CHCOR)_2R'$-

ausgewählt ist, worin R eine substituierte oder unsubstituierte, zweiwertige Kohlenwasserstoffgruppe mit 1 bis 10 Kohlenstoffatomen oder eine Gruppe der Formel $CH_2CH(CH_2OC_6H_5)$ und R' CH- oder $CCH_3$-bedeuten; $R^2$ eine einwertige organische Gruppe mit 1 bis 18 Kohlenstoffatomen ist, welche keine zur Additionspolymerisation fähige Vinylgruppe enthält; $R^3$ eine zweiwertige Kohlenwasserstoffgruppe mit 2 bis 4 Kohlenstoffatomen ist; $R^4$ eine substituierte oder unsubstituierte Kohlenwasserstoffgruppe mit 1 bis 9 Kohlenstoffatomen der gleichen oder verschiedenen Art ist; a eine ganze Zahl von 1 bis 3 ist; und n eine ganze Zahl von 5 bis 500 ist; sowie weniger als 10 Gew.-Teile eines Photopolymerisationsinitiators pro 100 Gew.-Teilen des Organopolysiloxans.

2. Zusammensetzung nach Anspruch 1, wobei der Photopolymerisationsinitiator aus der aus Benzophenon, Benzoinether, Ketal, Thioxanthon, Acetophenon und Derivaten hiervon bestehenden Gruppe ausgewählt ist.

**Revendications**

1. Composition gélifiée durcissable aux ultraviolets, comprenant un organopolysiloxane comme principal composant, représenté par la formule générale développée suivante :

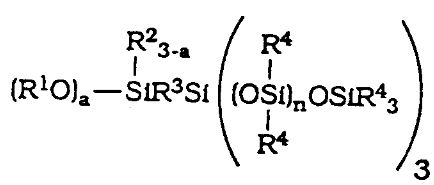

dans laquelle $R^1$ représente un groupe organique monovalent comportant de 4 à 25 atomes de carbone et contenant 1 à 2 groupes fonctionnels vinyle, $R^1$ étant choisi parmi les formules suivantes :

$CH_2 = CHCOOR-$, $CH_2 = C(CH_3)COOR-$, $CH_2 = CHCOR-$,
$(CH_2 = CHCOOR)_2R'-$ $\{CH_2 = C(CH_3)COOR\}_2R'-$
$(CH_2CHCOR)_2R'-$, et
$CH_2 = CH(CH_3)COOCH_2\underset{|}{C}HCH_2OOCCH = CH_2$

dans laquelle R représente un groupe hydrocarboné bivalent substitué ou non substitué comportant de 1 à 10 atomes de carbone ou un groupe de formule $CH_2CH(CH_2OC_6H_5)$ et R' représente CH ou $CCH_3$ ; $R^2$ est un groupe organique monovalent comportant de 1 à 18 atomes de carbone et ne comportant pas de groupe vinyle capable de donner lieu à une polymérisation par addition ; $R^3$ représente un groupe hydrocarboné bivalent comportant de 2 à 4 atomes de carbone ; $R^4$ représente un groupe hydrocarboné substitué ou non substitué comportant de 1 à 9 atomes de carbone d'un type identique ou différent ; a est un entier de 1 à 3 ; et n est un entier de 5 à 500 ; et moins de 10 parties en poids d'un initiateur de photopolymérisation pour 100 parties en poids de cet organopolysiloxane.

**2.** Composition selon la revendication 1, dans laquelle l'initiateur de photo-polymérisation est choisi parmi la benzophénone, l'éther de benzoïne, un acétal, la thioxanthone, l'acétophénone et les dérivés de ceux-ci.